# EUROPÄISCHE PATENTSCHRIFT

(11) **EP 3 463 760 B1**
(45) Veröffentlichungstag und Bekanntmachung des Hinweises auf die Patenterteilung: **08.07.2020**
(21) Anmeldenummer: 17723658.5
(22) Anmeldetag: 08.05.2017
(51) Int. Cl.: B25F 5/00, H02M 7/5387

(54) **HANDGEFÜHRTES ELEKTROWERKZEUG MIT EINEM SCHWINGFÄHIGEN ANREGUNGSAKTOR**
HANDHELD POWER TOOL HAVING AN EXCITATION ACTUATOR WHICH CAN VIBRATE
OUTIL ÉLECTRIQUE MANUEL DOTÉ D'UN ACTIONNEUR D'EXCITATION POUVANT VIBRER

(30) Priorität: 02.06.2016 DE 102016209673
(43) Veröffentlichungstag der Anmeldung: 10.04.2019
(73) Patentinhaber: Robert Bosch GmbH, 70442 Stuttgart (DE)
(72) Erfinder: KUEHNER, Jochen, 71522 Backnang (DE); KUHNEN, Klaus, 66128 Saarbruecken (DE)
(86) Internationale Anmeldenummer: PCT/EP2017/060897
(87) Internationale Veröffentlichungsnummer: WO 2017/207222

(56) Entgegenhaltungen:
- DE-A1-102011 078 452
- DE-A1-102013 222 046
- DE-A1-102014 220 225

## Beschreibung

### Stand der Technik

Die vorliegende Erfindung betrifft ein handgeführtes Elektrowerkzeug mit mindestens einer Antriebseinheit, die zum schwingenden Antrieb eines zugeordneten Einsatzwerkzeugs mindestens einen schwingfähigen Anregungsaktor aufweist und mit einer Elektronikeinheit zur gesteuerten Energieversorgung der Antriebseinheit versehen ist, wobei die Elektronikeinheit zumindest einen Wechselrichter, einen Transformator und einen Messkreis aufweist, wobei der Wechselrichter zur Erzeugung einer primärseitigen Transformatorspannung und eines primärseitigen Transformatorstroms des Transformators ausgebildet ist, wobei der Transformator dazu ausgebildet ist, die primärseitige Transformatorspannung und den primärseitigen Transformatorstrom in eine anwendungsspezifische Versorgungsspannung und einen Versorgungsstrom für die Antriebseinheit zu transformieren, und wobei dem Messkreis eine Steuerung zugeordnet ist, die dazu ausgebildet ist, aus einem vorgegebenen Sollwert und einem vom Messkreis erfassten Messwert zumindest ein Steuersignal für den Wechselrichter zu erzeugen.

Aus dem Stand der Technik ist ein derartiges, als Ultraschallschwinger ausgebildetes, handgeführtes Elektrowerkzeug mit einer Antriebseinheit zum schwingenden Antrieb eines zugeordneten Einsatzwerkzeugs bekannt. Dabei weist die Antriebseinheit einen schwingfähigen Anregungsaktor auf. Des Weiteren ist das Elektrowerkzeug mit einer Elektronikeinheit zur gesteuerten Energieversorgung der Antriebseinheit versehen. Die Elektronikeinheit weist einen Wechselrichter, einen Transformator und einen Messkreis auf. Dabei ist der Wechselrichter zur Erzeugung einer primärseitigen Transformatorspannung und eines primärseitigen Transformatorstroms des Transformators ausgebildet. Der Transformator ist dazu ausgebildet, die primärseitige Transformatorspannung und den primärseitigen Transformatorstrom in eine anwendungsspezifische Versorgungsspannung und einen Versorgungsstrom für die Antriebseinheit zu transformieren. Darüber hinaus ist dem Messkreis eine Steuerung zugeordnet, die dazu ausgebildet ist, aus einem vorgegebenen Sollwert und einem vom Messkreis erfassten Messwert zumindest ein Steuersignal für den Wechselrichter zu erzeugen. Dabei ist der Messkreis sekundärseitig zum Transformator angeordnet, wobei eine Energieübertragung für die Antriebseinheit sekundärseitig über Schleifringe stattfindet.

### Offenbarung der Erfindung

Die vorliegende Erfindung stellt ein neues handgeführtes Elektrowerkzeug mit mindestens einer Antriebseinheit bereit, die zum schwingenden Antrieb eines zugeordneten Einsatzwerkzeugs mindestens einen schwingfähigen Anregungsaktor aufweist und mit einer Elektronikeinheit zur gesteuerten Energieversorgung der Antriebseinheit versehen ist, wobei die Elektronikeinheit zumindest einen Wechselrichter, einen Transformator und einen Messkreis aufweist, wobei der Wechselrichter zur Erzeugung einer primärseitigen Transformatorspannung und eines primärseitigen Transformatorstroms des Transformators ausgebildet ist, wobei der Transformator dazu ausgebildet ist, die primärseitige Transformatorspannung und den primärseitigen Transformatorstrom in eine anwendungsspezifische Versorgungsspannung und einen Versorgungsstrom für die Antriebseinheit zu transformieren, und wobei dem Messkreis eine Steuerung zugeordnet ist, die dazu ausgebildet ist, aus einem vorgegebenen Sollwert und einem vom Messkreis erfassten Messwert zumindest ein Steuersignal für den Wechselrichter zu erzeugen. Der Messkreis ist zwischen dem Wechselrichter und dem Transformator angeordnet.

Die Erfindung ermöglicht somit die Bereitstellung eines handgeführten Elektrowerkzeugs, bei dem durch die Anordnung des Messkreises zwischen dem Wechselrichter und dem Transformator eine berührungslose Energieübertragung für die Antriebseinheit stattfinden kann. Somit kann eine Bereitstellung einer sicheren und zuverlässigen Antriebseinheit ermöglicht werden, wobei ein verschleißbedingter Ausfall des handgeführten Elektrohandwerkzeugs zumindest annähernd vermieden werden kann.

Vorzugsweise ist der Messkreis zur primärseitigen Messung der Transformatorspannung und des Transformatorstroms ausgebildet. Somit kann auf einfache Art und Weise eine Stabilisierung des mindestens einen schwingfähigen Anregungsaktors ermöglicht werden.

Die Steuerung ist bevorzugt dazu ausgebildet, das zumindest eine Steuersignal für den Wechselrichter aus einem vorgegebenen Phasensollwert und einem vom Messkreis erfassten Messwert zu erzeugen. Somit kann eine sichere und zuverlässige Erzeugung des zumindest einen Steuersignals ermöglicht werden.

Gemäß einer Ausführungsform ist der Transformator zur berührungslosen Energieübertragung ausgebildet. Somit kann eine einfache und verschleißfreie Energieübertragung ermöglicht werden.

Vorzugsweise ist der Transformator nach Art eines Drehtransformators ausgebildet. Somit kann ein robuster und stabiler Transformator bereitgestellt werden.

Ein Phasennulldurchgang einer Klemmimpedanz der Antriebseinheit und ein Phasennulldurchgang einer Trafoeingangsimpedanz des Transformators sind bevorzugt innerhalb vorgegebener Toleranzen einer vorgegebenen Betriebsfrequenz zugeordnet. Somit kann eine einfache und unkomplizierte Regelung der Antriebseinheit über den Phasennulldurchgang der Trafoeingangsimpedanz des Transformators ermöglicht werden.

Gemäß einer Ausführungsform ist eine der Trafoeingangsimpedanz zugeordnete Trafoeingangsimpedanzphase als Regelinformation für eine Phasenregelung der Antriebseinheit vorgegeben. Somit kann eine primärseitige Regelung der Antriebseinheit ermöglicht werden.

Die Steuerung ist vorzugsweise nach Art einer digitalen Steuerung ausgebildet. Somit kann eine zuverlässige und störungsunempfindliche Steuerung bereitgestellt werden.

Bevorzugt ist ein Leistungsfilter zwischen dem Transformator und der Antriebseinheit angeordnet. Somit kann eine oberwellenarme Ansteuerspannung der Antriebseinheit und/oder ein oberwellenarmer Ansteuerstrom der Antriebseinheit bereitgestellt werden.

Gemäß einer Ausführungsform ist das Elektrowerkzeug nach Art eines Ultraschallbohrers ausgebildet. Somit kann einfach und unkompliziert ein geeignetes handgeführtes Elektrowerkzeug bereitgestellt werden.

Des Weiteren stellt die vorliegende Erfindung ein neues Verfahren zum Betreiben eines handgeführten Elektrowerkzeugs mit mindestens einer Antriebseinheit bereit, die zum schwingenden Antrieb eines zugeordneten Einsatzwerkzeugs mindestens einen schwingfähigen Anregungsaktor aufweist und mit einer Elektronikeinheit zur gesteuerten Energieversorgung der Antriebseinheit versehen ist, wobei die Elektronikeinheit zumindest einen Wechselrichter, einen Transformator und einen Messkreis aufweist, und wobei der Wechselrichter eine primärseitige Transformatorspannung und einen primärseitigen Transformatorstrom des Transformators erzeugt, der Transformator die primärseitige Transformatorspannung und den primärseitigen Transformatorstrom in eine anwendungsspezifische Versorgungsspannung und einen Versorgungsstrom für die Antriebseinheit transformiert, und eine dem Messkreis zugeordnete Steuerung aus einem vorgegebenen Sollwert und einem vom Messkreis erfassten Messwert zumindest ein Steuersignal für den Wechselrichter erzeugt. Der Messkreis ist bevorzugt zwischen dem Wechselrichter und dem Transformator angeordnet und führt eine primärseitige Messung der Transformatorspannung und des Transformatorstroms des Transformators aus.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
- Fig. 1: eine schematische Ansicht eines handgeführten Elektrowerkzeugs mit einer Elektronikeinheit und einer Antriebseinheit,
- Fig. 2: eine schematische Ansicht des handgeführten Elektrowerkzeugs von Fig. 1 mit der Elektronikeinheit, die eine Steuerung und eine Leistungs- und Analogelektronik aufweist,
- Fig. 3: ein Diagramm einer beispielhaften Klemmimpedanz und einer Trafoeingangsimpedanz bei dem Elektrowerkzeug von Fig. 1, und
- Fig. 4: ein Diagramm einer beispielhaften korrigierten Klemmimpedanz und einer korrigierten Trafoeingangsimpedanz bei dem Elektrowerkzeug von Fig. 1.

### Beschreibung der Ausführungsbeispiele

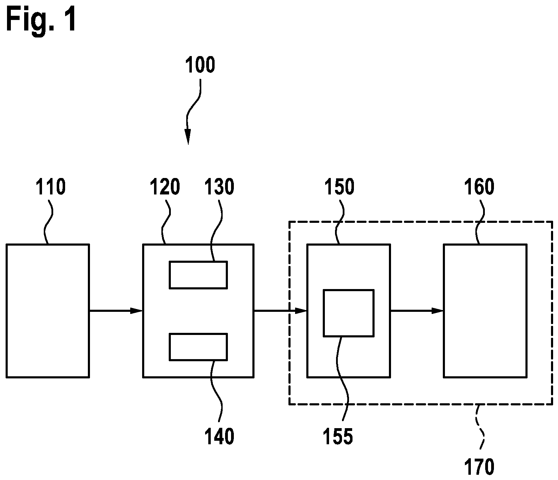

Fig. 1 zeigt schematisch ein handgeführtes Elektrowerkzeug 100 gemäß der vorliegenden Erfindung, das bevorzugt nach Art eines piezoelektrisch betriebenen Ultraschallschwingsystems ausgebildet ist. Das handgeführte Elektrowerkzeug 100 ist mit mindestens einer Elektronikeinheit 120 zur gesteuerten Energieversorgung einer Antriebseinheit 150 versehen, die zum schwingenden Antrieb eines zugeordneten Einsatzwerkzeugs 160 ausgebildet ist und hierzu vorzugsweise mindestens einen schwingfähigen Anregungsaktor 155 aufweist. Vorzugsweise bildet die Antriebseinheit 150 mit dem Anregungsaktor 155 und dem Einsatzwerkzeug 160 eine Last 170 aus.

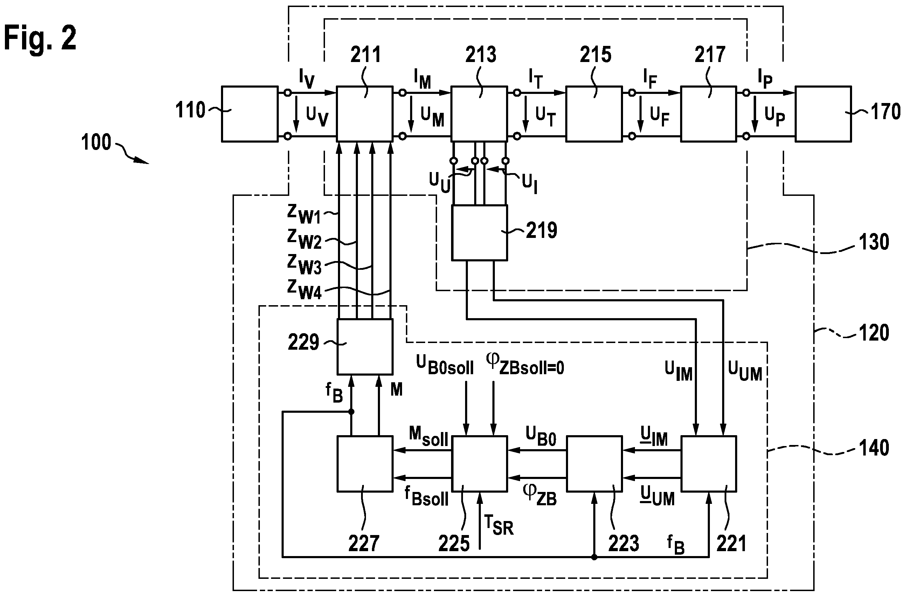

Bevorzugt wird die Elektronikeinheit 120 von einer Energiequelle 110 versorgt, die beispielhaft netzunabhängig mit einem Akkupack ausgebildet ist. Jedoch könnte die Energiequelle 110 auch netzabhängig ausgebildet sein. Des Weiteren ist der Elektronikeinheit 120 eine Steuerung 140 und/oder eine Leistungs- und Analogelektronik 130 zugeordnet, die näher in Fig. 2 beschrieben wird.

Das handgeführte Elektrowerkzeug 100 ist vorzugsweise nach Art eines Ultraschallbohrers ausgebildet, bei dem bevorzugt eine Ultraschallschwingung mit einer Drehbewegung überlagert ist. Hierbei kann die Antriebseinheit 150 z.B. scheibenförmige Piezokeramiken zur Ausbildung des schwingfähigen Anregungsaktors 155 aufweisen. Alternativ hierzu kann das handgeführte Elektrowerkzeug 100 auch z.B. nach Art eines Schneidgeräts, insbesondere eines Piezomessers bzw. -cutters, zum Schneiden von unterschiedlichen Materialien ausgebildet sein, bei dem das Einsatzwerkzeug 160 von einem Schneidwerkzeug, insbesondere einer Klinge ausgebildet wird. Es wird jedoch darauf hingewiesen, dass die vorliegende Erfindung nicht auf derartige Ultraschallbohrer und/oder Piezomesser bzw. -cutter eingeschränkt ist, sondern vielmehr bei beliebigen Ultraschallschwingsystemen Anwendung finden kann.

Fig. 2 zeigt das Elektrowerkzeug 100 von Fig. 1 und verdeutlicht dessen Elektronikeinheit 120. Diese Elektronikeinheit 120 weist, wie oben beschrieben, eine Steuerung 140 und eine Leistungs- und Analogelektronik 130 auf. Dabei ist die Elektronikeinheit 120 vorzugsweise für einen Antiresonanzfrequenz-Betrieb ausgebildet, könnte jedoch auch für einen Resonanzfrequenz-Betrieb ausgebildet sein.

Bevorzugt ist die Leistungs- und Analogelektronik 130 nach Art eines Resonanzstromrichters ausgebildet, der dazu dient, die Antriebseinheit 150 möglichst stabil und robust zu halten, d.h. zumindest weitgehend unabhängig von sich ändernden Umgebungs- und Lastbedingungen, sowie verlustarm in ihrem Antiresonanzpunkt mit einer vorgegebenen Schwingungsamplitude zu betreiben. Abhängig von einer jeweils gewählten Ausführungsform können jedoch auch andere Arten von Resonanzstromrichter verwendet werden.

Gemäß einer Ausführungsform weist die Leistungs- und Analogelektronik 130 mindestens einen Wechselrichter 211 auf, dem vorzugsweise mindestens ein Pulssignalgenerator 229 zugeordnet ist. Bevorzugt weist die Leistungs- und Analogelektronik 130 den Wechselrichter 211, einen Messkreis 213, einen Transformator 215, einen Leistungsfilter 217 und/oder eine Signalelektronik 219 auf.

Der Pulssignalgenerator 229 ist vorzugsweise dazu ausgebildet, Steuersignale Z_{W1}, Z_{W2}, Z_{W3}, Z_{W4} für den Wechselrichter 211 bereitzustellen, um eine Erzeugung einer anwendungsspezifischen Versorgungsspannung U_{P} für die Antriebseinheit 150 bzw. der Last 170 auf der Basis dieser Steuersignale Z_{W1}, Z_{W2}, Z_{W3}, Z_{W4} zu ermöglichen. Bevorzugt formt der Wechselrichter 211 abhängig von den Steuersignalen Z_{W1}, Z_{W2}, Z_{W3}, Z_{W4} eine von der Energiequelle 110 bereitgestellte Versorgungsspannung Uv in eine pulsförmige Spannung U_{T} um. Diese weist vorzugsweise die Form von Spannungspulsen, d.h. die Form eines pulsweitenmodulierten Spannungssignals, dessen Spannungs-Zeit-Fläche proportional zu einer Amplitude einer Grundwelle der Versorgungsspannung U_{P} im Spannungs-ZeitSignal ist, auf.

Der Wechselrichter 211 ist bevorzugt zur Erzeugung einer primärseitigen Transformatorspannung U_{T} und eines primärseitigen Transformatorstroms I_{T} des Transformators 215 ausgebildet. Die primärseitige Transformatorspannung U_{T} und der primärseitige Transformatorstroms I_{T} ist hierbei vorzugsweise von einem Versorgungsstrom I_{V} abgeleitet, der von der Energiequelle 110 bereitgestellt wird.

Der Transformator 215 ist vorzugsweise zur berührungslosen Energieübertragung ausgebildet, bevorzugt nach Art eines Drehtransformators. Dabei ist der Transformator 215 vorzugsweise dazu ausgebildet, die primärseitige Transformatorspannung U_{T} und den primärseitigen Transformatorstrom I_{T} in die anwendungsspezifische Versorgungsspannung U_{P} und einen Versorgungsstrom I_{P} für die Antriebseinheit 150 bzw. für die Last 170 zu transformieren.

Bevorzugt transformiert der Transformator 215 die vergleichsweise niedrige primärseitige Transformatorspannung U_{T} und den vergleichsweise hohen primärseitigen Transformatorstrom I_{T} in eine vergleichsweise große Ausgangsspannung U_{F} und einen vergleichsweise niedrigen Ausgangsstrom I_{F} und liefert diese an den Leistungsfilter 217. Dieser hat die Aufgabe, im Wechselrichter 211 erzeugte Oberwellen in der Transformatorspannung U_{T} und dem Transformatorstrom I_{T}, bzw. der Ausgangsspannung U_{F} und dem Ausgangsstrom I_{F}, zu dämpfen. Somit können eine zumindest weitgehend oberwellenarme Versorgungsspannung U_{P} und ein möglichst oberwellenarmer Versorgungsstrom I_{P} erzeugt werden. Bevorzugt ist der Leistungsfilter 217 zwischen dem Transformator 215 und der Antriebseinheit 150 bzw. der Last 170 angeordnet.

Der Messkreis 213 ist zwischen dem Wechselrichter 211 und dem Transformator 215 angeordnet. Vorzugsweise dient der Messkreis 213 zur zumindest im Wesentlichen verlustarmen simultanen Messung der Ansteuerspannung U_{M} und des Ansteuerstroms I_{M}, um diese dann als Versorgungsspannung U_{P} und Versorgungsstrom I_{P} der Antriebseinheit 150 bzw. der Last 170 zuzuführen. Dabei ist der Messkreis 213 bevorzugt zur primärseitigen Messung der Transformatorspannung U_{T} und des Transformatorstroms I_{T} ausgebildet. Hierbei erzeugt der Messkreis 213 eine Messspannung Uu für die Ansteuerspannung U_{M} und eine Messspannung U_{I} für den Ansteuerstrom I_{M}, die der Signalelektronik 219 zugeführt werden und von dieser bevorzugt zumindest im Wesentlichen verlustfrei verarbeitet und ausgangsseitig in gefilterte Messspannungen U_{UM} und U_{IM} umgeformt werden. Die Signalelektronik 219 ist dabei vorzugsweise als potentialtrennende Signalelektronik ausgebildet.

Die Signalelektronik 219 führt die gefilterten Messspannungen U_{UM} und U_{IM} der Steuerung 140 zu. Dabei ist die vorzugsweise als digitale Steuerung ausgebildete Steuerung 140 dem Messkreis 213 zugeordnet und dazu ausgebildet, aus einem vorgegebenen Sollwert, bevorzugt aus einem vorgegebenen Phasensollwert ϕ_{ZBsoll} und einem vom Messkreis 213 erfassten Messwert U_{U}, U_{I}, zumindest ein Steuersignal Z_{W1}, Z_{W2}, Z_{W3}, Z_{W4} für den Wechselrichter 211 zu erzeugen.

Der vorzugsweise digitalen Steuerung 140 ist bevorzugt eine Signalverarbeitung 221, eine Messwertkorrektur 223, eine Regelung 225, die Stellgrößenquantisierung 227 und/oder der Pulssignalgenerator 229 zugeordnet. Illustrativ führt die vorzugsweise analoge Signalelektronik 219 die gefilterten Messspannungen U_{UM} und U_{IM} der bevorzugt digitalen Signalverarbeitung 221 zu. In der digitalen Signalverarbeitung 221 werden die gefilterten Messspannungen U_{UM} und U_{IM} auf Basis einer Betriebsfrequenz f_{B} der Elektronikeinheit 120 vorzugsweise in Messspannungen U_{UM} und U_{IM} umgewandelt.

Die Messspannungen U_{UM} und U_{IM} werden an die bevorzugt digitale Messwertkorrektur 223 geleitet. Die Messwertkorrektur 223 ist vorzugsweise dazu ausgebildet, auf Basis der Betriebsfrequenz f_{B} eine Kompensation des Übertragungsverhaltens der analogen Signalelektronik 219 in der Grundwelle zu bewerkstelligen. Abhängig von einer jeweils gewählten Ausbildung der Elektronikeinheit 120 kann jedoch auch auf die Messwertkorrektur 223 verzichtet werden.

Eine von der Messwertkorrektur 223 bereitgestellte Amplitude U_{B0} und eine entsprechende Phase ϕ_{ZB} der Antiresonanzimpedanz werden in der vorzugsweise digitalen Regelung 225 zur Ermittlung eines Modulationsgrad-Sollwerts Mₛₒₗₗ und einer jeweils vorzugebenden Betriebsfrequenz f_{Bsoll} mit Sollwerten U_{B0soll} bzw. ϕ_{ZBsοll} für die Phase ϕ_{ZB} verglichen. Illustrativ verarbeitet die digitale Steuerung 225 auch ein Temperatursignal T_{SR}.

Nachfolgend werden der Modulationsgrad-Sollwert Mₛₒₗₗ und die Betriebsfrequenz f_{Bsoll} an die Stellgrößenquantisierung 227 weitergeleitet. Die Stellgrößenquantisierung 227 beschreibt Quantisierungseffekte in Stellgrößen des Pulssignalgenerators 229 aufgrund der endlichen Zeitauflösung und Zahlendarstellung einer zumindest von der Signalverarbeitung 221, der Messwertkorrektur 223, der Regelung 225 und der Stellgrößenquantisierung 227 ausgebildeten, vorzugsweise digitalen Steuerung 140. Hierbei bestimmt die Stellgrößenquantisierung 227 vorzugsweise die Betriebsfrequenz f_{B} und einen Modulationsgrad M für den Pulssignalgenerator 229 auf Basis des Modulationsgrad-Sollwerts Mₛₒₗₗ und der jeweils vorzugebenden Betriebsfrequenz f_{Bsoll}. Die digitale Steuerung 140 ist vorzugsweise mittels eines Mikrocontrollers implementiert. Abhängig von einer gewählten technischen Realisierung kann hierbei auf die Stellgrößenquantisierung 227 verzichtet werden.

Der bevorzugt digitale Pulssignalgenerator 229 aktiviert über die Steuersignale Z_{W1}, Z_{W2}, Z_{W3}, Z_{W4} vorzugsweise vier Schalttransistoren des Wechselrichters 211, so dass von diesem wie oben beschrieben mit Spannungspulsen die pulsförmige primärseitige Transformatorspannung U_{T} erzeugt werden kann. Abhängig von der gewählten Anzahl der Schalttransistoren des Wechselrichters 211 weist der digitale Pulssignalgenerator 229 hierbei mehr oder weniger Steuersignale Z_{W1}, Z_{W2}, Z_{W3}, Z_{W4} auf. Bei einer vorgegebenen Anzahl von mehr als zwei Stützstellen pro Periode der pulsförmigen Transformatorspannung U_{T} erfordert die von der Steuerung 140 ausgeführte Signalverarbeitung eine exakte Erfassung einer Signalperiode, so dass eine Abtastfrequenz an die Betriebsfrequenz f_{B} gekoppelt werden sollte. Die Steuerung 140 weist somit eine variable Abtastrate auf, die an die Betriebsfrequenz f_{B} angepasst wird. Dazu wird vorzugsweise von der Stellgrößenquantisierung 227 die Betriebsfrequenz f_{B} sowohl an die digitale Signalverarbeitung 221 als auch an die Messwertkorrektur 223 als Stellwert zugeführt.

Darüber hinaus wird bevorzugt bei einem Verfahren zum Betreiben des handgeführten Elektrowerkzeugs 100 eine primärseitige Messung der Transformatorspannung U_{T} und des Transformatorstroms I_{T} des Transformators 215 ausgeführt, d.h. der Messkreis 213 ist, wie oben beschrieben, vor dem Transformator 215 angeordnet. Somit kann der vorzugsweise als Drehtransformator ausgebildete Transformator 215 eine berührungslose Energieübertragung ausführen und somit vorzugsweise zum Ultraschallbohren verwendet werden.

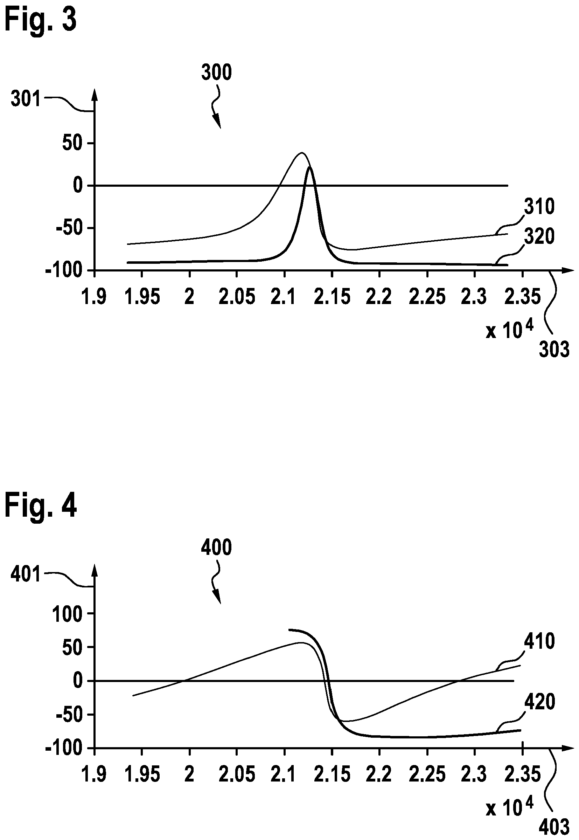

Fig. 3 zeigt ein beispielhaftes Diagramm 300, das illustrativ eine Trafoeingangsimpedanz-Kurve 310 und eine Klemmenimpedanz-Kurve 320 aufweist. Dabei ist auf einer Abszisse 303 die Betriebsfrequenz f_{B} in Hz aufgezeichnet und auf einer Ordinate 301 ist eine Phase Z in Grad aufgezeichnet. Die Trafoeingangsimpedanz-Kurve 310 verdeutlicht einen Phasennulldurchgang einer Trafoeingangsimpedanz Z_{T} des Transformators 215 und die Klemmenimpedanz-Kurve 320 verdeutlicht einen Phasennulldurchgang einer Klemmimpedanz Z_{P} der Antriebseinheit 150. Dabei sind die beiden Phasennulldurchgänge illustrativ innerhalb vorgegebener Toleranzen einer vorgegebenen Betriebsfrequenz f_{B} zugeordnet. Dadurch kann eine der Trafoeingangsimpedanz Z_{T} zugeordnete Trafoeingangsimpedanzphase als Regelinformation für eine Phasenregelung der Antriebseinheit 150 dienen. Bevorzugt ist die Trafoeingangsimpedanzphase als Regelinformation für eine Phasenregelung der Antriebseinheit 150 vorgegeben.

Fig. 4 zeigt ein beispielhaftes Diagramm 400, das illustrativ eine Trafoantiresonanzimpedanz-Kurve 410 und eine Antiresonanzimpedanz-Kurve 420 aufweist. Dabei ist auf einer Abszisse 403 die Betriebsfrequenz f_{B} in Hz aufgezeichnet und auf einer Ordinate 401 ist eine Phase Z in Grad aufgezeichnet. Die Trafoantiresonanzimpedanz-Kurve 410 verdeutlicht einen Phasennulldurchgang einer vorzugsweise korrigierten Trafoantiresonanzimpedanz Z_{B} des Transformators 215 und die Antiresonanzimpedanz-Kurve 420 verdeutlicht einen Phasennulldurchgang einer bevorzugt korrigierten Antiresonanzimpedanz Z_{A} der Antriebseinheit 150. Dabei sind die beiden Phasennulldurchgänge analog zu Fig. 3 illustrativ innerhalb vorgegebener Toleranzen einer vorgegebenen Betriebsfrequenz f_{B} zugeordnet.

## Patentansprüche

1. Handgeführtes Elektrowerkzeug (100) mit mindestens einer Antriebseinheit (150), die zum schwingenden Antrieb eines zugeordneten Einsatzwerkzeugs (160) mindestens einen schwingfähigen Anregungsaktor (155) aufweist und mit einer Elektronikeinheit (120) zur gesteuerten Energieversorgung der Antriebseinheit (150) versehen ist, wobei die Elektronikeinheit (120) zumindest einen Wechselrichter (211), einen Transformator (215) und einen Messkreis (213) aufweist, wobei der Wechselrichter (211) zur Erzeugung einer primärseitigen Transformatorspannung (U_{T}) und eines primärseitigen Transformatorstroms (I_{T}) des Transformators (215) ausgebildet ist, wobei der Transformator (215) dazu ausgebildet ist, die primärseitige Transformatorspannung (U_{T}) und den primärseitigen Transformatorstrom (I_{T}) in eine anwendungsspezifische Versorgungsspannung (U_{P}) und einen Versorgungsstrom (I_{P}) für die Antriebseinheit (150) zu transformieren, wobei dem Messkreis (213) eine Steuerung (140) zugeordnet ist, die dazu ausgebildet ist, aus einem vorgegebenen Sollwert (ϕ_{ZBsoll}) und einem vom Messkreis (213) erfassten Messwert (U_{U}, U_{I}) zumindest ein Steuersignal (Z_{W1}, Z_{W2}, Z_{W3}, Z_{W4}) für den Wechselrichter (211) zu erzeugen, **dadurch gekennzeichnet, dass** der Messkreis (213) zwischen dem Wechselrichter (211) und dem Transformator (215) angeordnet ist.

2. Elektrowerkzeug nach Anspruch 1, **dadurch gekennzeichnet, dass** der Messkreis (213) zur primärseitigen Messung der Transformatorspannung (U_{T}) und des Transformatorstroms (I_{T}) ausgebildet ist.

3. Elektrowerkzeug nach Anspruch 1 oder 2, **dadurch gekennzeichnet, dass** die Steuerung (140) dazu ausgebildet ist, das zumindest eine Steuersignal (Z_{W1}, Z_{W2}, Z_{W3}, Z_{W4}) für den Wechselrichter (211) aus einem vorgegebenen Phasensollwert (ϕ_{ZBsoll}) und einem vom Messkreis (213) erfassten Messwert (U_{U}, U_{I}) zu erzeugen.

4. Elektrowerkzeug nach einem der vorhergehenden Ansprüche, **dadurch gekennzeichnet, dass** der Transformator (215) zur berührungslosen Energieübertragung ausgebildet ist.

5. Elektrowerkzeug nach Anspruch 4, **dadurch gekennzeichnet, dass** der Transformator (215) nach Art eines Drehtransformators ausgebildet ist.

6. Elektrowerkzeug nach einem der vorhergehenden Ansprüche, **dadurch gekennzeichnet, dass** ein Phasennulldurchgang einer Klemmimpedanz (Z_{P}) der Antriebseinheit (150) und ein Phasennulldurchgang einer Trafoeingangsimpedanz (Z_{T}) des Transformators (215) innerhalb vorgegebener Toleranzen einer vorgegebenen Betriebsfrequenz (f_{B}) zugeordnet sind.

7. Elektrowerkzeug nach Anspruch 6, **dadurch gekennzeichnet, dass** eine der Trafoeingangsimpedanz (Z_{T}) zugeordnete Trafoeingangsimpedanzphase als Regelinformation für eine Phasenregelung der Antriebseinheit (150) vorgegeben ist.

8. Elektrowerkzeug nach einem der vorhergehenden Ansprüche, **dadurch gekennzeichnet, dass** die Steuerung (140) nach Art einer digitalen Steuerung ausgebildet ist.

9. Elektrowerkzeug nach einem der vorhergehenden Ansprüche, **dadurch gekennzeichnet, dass** ein Leistungsfilter (217) zwischen dem Transformator (215) und der Antriebseinheit (150) angeordnet ist.

10. Elektrowerkzeug nach einem der vorhergehenden Ansprüche, das nach Art eines Ultraschallbohrers ausgebildet ist.

11. Verfahren zum Betreiben eines handgeführten Elektrowerkzeugs (100) mit mindestens einer Antriebseinheit (150), die zum schwingenden Antrieb eines zugeordneten Einsatzwerkzeugs (160) mindestens einen schwingfähigen Anregungsaktor (155) aufweist und mit einer Elektronikeinheit (120) zur gesteuerten Energieversorgung der Antriebseinheit (150) versehen ist, wobei die Elektronikeinheit (120) zumindest einen Wechselrichter (211), einen Transformator (215) und einen Messkreis (213) aufweist, und wobei der Wechselrichter (211) eine primärseitige Transformatorspannung (U_{T}) und einen primärseitigen Transformatorstrom (I_{T}) des Transformators (215) erzeugt, der Transformator (215) die primärseitige Transformatorspannung (U_{T}) und den primärseitigen Transformatorstrom (I_{T}) in eine anwendungsspezifische Versorgungsspannung (U_{P}) und einen Versorgungsstrom (I_{P}) für die Antriebseinheit (150) transformiert, und eine dem Messkreis (213) zugeordnete Steuerung (140) aus einem vorgegebenen Sollwert (ϕ_{ZBsoll}) und einem vom Messkreis (213) erfassten Messwert (Uu, U_{I}) zumindest ein Steuersignal (Z_{W1}, Z_{W2}, Z_{W3}, Z_{W4}) für den Wechselrichter (211) erzeugt, **dadurch gekennzeichnet, dass** der Messkreis (213) zwischen dem Wechselrichter (211) und dem Transformator (215) angeordnet ist und eine primärseitige Messung der Transformatorspannung (U_{T}) und des Transformatorstroms (I_{T}) des Transformators (215) ausführt.

## Claims

1. Handheld power tool (100) having at least one drive unit (150) which has at least one oscillatory excitation actuator (155) for driving an associated application tool (160) in an oscillating manner and is provided with an electronic unit (120) for supplying energy to the drive unit (150) in a controlled manner, wherein the electronic unit (120) has at least one inverter (211), a transformer (215) and a measuring circuit (213), wherein the inverter (211) is designed to generate a primary-side transformer voltage (U_{T}) and a primary-side transformer current (I_{T}) of the transformer (215), wherein the transformer (215) is designed to transform the primary-side transformer voltage (U_{T}) and the primary-side transformer current (I_{T}) into an application-specific supply voltage (U_{P}) and a supply current (I_{P}) for the drive unit (150), wherein the measuring circuit (213) is assigned a controller (140) which is designed to generate at least one control signal (Z_{W1}, Z_{W2}, Z_{W3}, Z_{W4}) for the inverter (211) from a predefined desired value (ϕ_{ZBsoll}) and a measured value (U_{U}, U_{I}) captured by the measuring circuit (213), **characterized in that** the measuring circuit (213) is arranged between the inverter (211) and the transformer (215).

2. Power tool according to Claim 1, **characterized in that** the measuring circuit (213) is designed to measure the transformer voltage (U_{T}) and the transformer current (I_{T}) on the primary side.

3. Power tool according to Claim 1 or 2, **characterized in that** the controller (140) is designed to generate the at least one control signal (Z_{W1}, Z_{W2}, Z_{W3}, Z_{W4}) for the inverter (211) from a predefined desired phase value (ϕ_{ZBsoll}) and a measured value (U_{U}, U_{I}) captured by the measuring circuit (213).

4. Power tool according to one of the preceding claims, **characterized in that** the transformer (215) is designed for contactless energy transmission.

5. Power tool according to Claim 4, **characterized in that** the transformer (215) is in the form of a rotary transformer.

6. Power tool according to one of the preceding claims, **characterized in that** a phase zero crossing of a clamping impedance (Z_{P}) of the drive unit (150) and a phase zero crossing of a transformer input impedance (Z_{T}) of the transformer (215) are assigned to a predefined operating frequency (f_{B}) within predefined tolerances.

7. Power tool according to Claim 6, **characterized in that** a transformer input impedance phase assigned to the transformer input impedance (Z_{T}) is predefined as control information for phase control of the drive unit (150).

8. Power tool according to one of the preceding claims, **characterized in that** the controller (140) is in the form of a digital controller.

9. Power tool according to one of the preceding claims, **characterized in that** a power filter (217) is arranged between the transformer (215) and the drive unit (150) .

10. Power tool according to one of the preceding claims, which is in the form of an ultrasonic drill.

11. Method for operating a handheld power tool (100) having at least one drive unit (150) which has at least one oscillatory excitation actuator (155) for driving an associated application tool (160) in an oscillating manner and is provided with an electronic unit (120) for supplying energy to the drive unit (150) in a controlled manner, wherein the electronic unit (120) has at least one inverter (211), a transformer (215) and a measuring circuit (213), and wherein the inverter (211) generates a primary-side transformer voltage (U_{T}) and a primary-side transformer current (I_{T}) of the transformer (215), the transformer (215) transforms the primary-side transformer voltage (U_{T}) and the primary-side transformer current (I_{T}) into an application-specific supply voltage (U_{P}) and a supply current (I_{P}) for the drive unit (150), and a controller (140) assigned to the measuring circuit (213) generates at least one control signal (Z_{W1}, Z_{W2}, Z_{W3}, Z_{W4}) for the inverter (211) from a predefined desired value (ϕ_{ZBsoll}) and a measured value (U_{U}, U_{I}) captured by the measuring circuit (213), **characterized in that** the measuring circuit (213) is arranged between the inverter (211) and the transformer (215) and measures the transformer voltage (U_{T}) and the transformer current (I_{T}) of the transformer (215) on the primary side.

## Revendications

1. Outil électrique manuel (100) comprenant au moins une unité d'entraînement (150) qui, pour l'entraînement oscillant d'un outil de service (160) associé, possède au moins un actionneur d'excitation (155) oscillant et comprend une unité électronique (120) destinée à l'alimentation en énergie commandée de l'unité d'entraînement (150), l'unité électronique (120) possédant au moins un onduleur (211), un transformateur (215) et un circuit de mesure (213), l'onduleur (211) étant configuré pour générer une tension de transformateur (U_{T}) côté primaire et un courant de transformateur (I_{T}) côté primaire du transformateur (215), le transformateur (215) étant configuré pour transformer la tension de transformateur (U_{T}) côté primaire et le courant de transformateur (I_{T}) côté primaire en une tension d'alimentation (U_{P}) et un courant d'alimentation (I_{P}) spécifiques à l'application pour l'unité d'entraînement (150), une commande (140) étant associée au circuit de mesure (213), laquelle est configurée pour générer au moins un signal de commande (Z_{W1}, Z_{W2}, Z_{W3}, Z_{W4}) pour l'onduleur (211) à partir d'une valeur de consigne (ϕ_{ZBsoll}) prédéfinie et d'une valeur mesurée (U_{U}, U_{I}) détectée par le circuit de mesure (213), **caractérisé en ce que** le circuit de mesure (213) est disposé entre l'onduleur (211) et le transformateur (215).

2. Outil électrique selon la revendication 1, **caractérisé en ce que** le circuit de mesure (213) est configuré pour la mesure côté primaire de la tension de transformateur (U_{T}) et du courant de transformateur (I_{T}).

3. Outil électrique selon la revendication 1 ou 2, **caractérisé en ce que** la commande (140) est configurée pour générer l'au moins un signal de commande (Z_{W1}, Z_{W2}, Z_{W3}, Z_{W4}) pour l'onduleur (211) à partir d'une valeur de consigne de phase (ϕ_{ZBsoll}) prédéfinie et d'une valeur mesurée (U_{U}, U_{I}) détectée par le circuit de mesure (213) .

4. Outil électrique selon l'une des revendications précédentes, **caractérisé en ce que** le transformateur (215) est configuré pour la transmission d'énergie sans contact.

5. Outil électrique selon la revendication 4, **caractérisé en ce que** le transformateur (215) est réalisé sous la forme d'un transformateur rotatif.

6. Outil électrique selon l'une des revendications précédentes, **caractérisé en ce qu'**un passage par zéro de phase est associé à une impédance de borne (Z_{P}) de l'unité d'entraînement (150) et un passage par zéro de phase est associé à une impédance d'entrée de transformateur (Z_{T}) du transformateur (215) à l'intérieur de tolérances prédéfinies d'une fréquence de fonctionnement (f_{B}) prédéfinie.

7. Outil électrique selon la revendication 6, **caractérisé en ce qu'**une phase d'impédance d'entrée de transformateur associée à l'impédance d'entrée de transformateur (Z_{T}) est prédéfinie pour une régulation de phase de l'unité d'entraînement (150) en tant qu'information de réglage.

8. Outil électrique selon l'une des revendications précédentes, **caractérisé en ce que** la commande (140) est réalisée sous la forme d'une commande numérique.

9. Outil électrique selon l'une des revendications précédentes, **caractérisé en ce qu'**un filtre de puissance (217) est disposé entre le transformateur (215) et l'unité d'entraînement (150).

10. Outil électrique selon l'une des revendications précédentes, lequel est réalisé sous la forme d'une foreuse à ultrasons.

11. Procédé pour faire fonctionner un outil électrique manuel (100) comprenant au moins une unité d'entraînement (150) qui, pour l'entraînement oscillant d'un outil de service (160) associé, possède au moins un actionneur d'excitation (155) oscillant et comprend une unité électronique (120) destinée à l'alimentation en énergie commandée de l'unité d'entraînement (150), l'unité électronique (120) possédant au moins un onduleur (211), un transformateur (215) et un circuit de mesure (213), et l'onduleur (211) générant une tension de transformateur (U_{T}) côté primaire et un courant de transformateur (I_{T}) côté primaire du transformateur (215), le transformateur (215) transformant la tension de transformateur (U_{T}) côté primaire et le courant de transformateur (I_{T}) côté primaire en une tension d'alimentation (U_{P}) et un courant d'alimentation (I_{P}) spécifiques à l'application pour l'unité d'entraînement (150), et une commande (140) associée au circuit de mesure (213) générant au moins un signal de commande (Z_{W1}, Z_{W2}, Z_{W3}, Z_{W4}) pour l'onduleur (211) à partir d'une valeur de consigne (ϕ_{ZBsoll}) prédéfinie et d'une valeur mesurée (U_{U}, U_{I}) détectée par le circuit de mesure (213), **caractérisé en ce que** le circuit de mesure (213) est disposé entre l'onduleur (211) et le transformateur (215) et réalise une mesure côté primaire de la tension de transformateur (U_{T}) et du courant de transformateur (I_{T}) du transformateur (215).
